# FASCICULE DE BREVET EUROPEEN

(11) **EP 2 320 726 B1**
(45) Date de publication et mention de la délivrance du brevet: **08.03.2017**
(21) Numéro de dépôt: 09740391.9
(22) Date de dépôt: 27.07.2009
(51) Int. Cl.: A01N 35/04, A01N 35/06, A01N 43/16, A01N 65/00, A01P 19/00, A01P 13/00

(54) **UTILISATION D'UNE PLANTE MYRICA GALE POUR LA PRODUCTION D'UN AGENT HERBICIDE**
VERWENDUNG EINER MYRICA GALE PFLANZE ZUR HERSTELLUNG EINES HERBIZIDEN MITTELS.
USE OF A MYRICA GALE PLANT FOR THE PRODUCTION OF AN HERBICIDAL AGENT.

(30) Priorité: 28.07.2008 FR 0855166
(43) Date de publication de la demande: 18.05.2011
(73) Titulaire: Université Claude Bernard Lyon I, 69625 Villeurbanne Cedex (FR); Centre National de la Recherche Scientifique, 75794 Paris Cedex 16 (FR)
(72) Inventeur: POPOVICI, Jean, F-69008 Lyon (france) (FR); BERTRAND, Cédric, F-81800 Coufouleux (FR); COMTE, Gilles, F-38090 Villefontaine - France (FR)
(74) Mandataire: Sarlin, Laure V.
(86) Numéro de dépôt international: PCT/FR2009/051507
(87) Numéro de publication internationale: WO 2010/012945

(56) Documents cités:
- GB-A- 2 224 934
- GB-A- 2 362 574
- US-A- 4 309 207
- HUFFORD, CHARLES D. ET AL: "New dihydrochalcones and flavanones from Uvaria angolensis" JOURNAL OF NATURAL PRODUCTS , 45(3), 337-42 CODEN: JNPRDF; ISSN: 0163-3864, 1982, XP002514648
- MISIRLIOGLU, HURIYE ET AL: ".beta.-Tricarbonyl compounds. Part 3. Synthesis of dihydrochalcones of Myrica gale" PHYTOCHEMISTRY (ELSEVIER) , 17(11), 2015-19 CODEN: PYTCAS; ISSN: 0031-9422, 1978, XP002514649
- HUGUET V ET AL: "Molecular phylogeny of Myricaceae: a reexamination of host-symbiont specificity", MOLECULAR PHYLOGENETICS AND EVOLUTION, ORLANDO, FL, US, vol. 34, no. 3, 1 March 2005 (2005-03-01), pages 557-568, XP027220775, ISSN: 1055-7903 [retrieved on 2005-01-28]

## Description

La présente invention concerne le domaine technique des herbicides. Plus précisément, la présente invention concerne l'utilisation d'une plante *Myrica gale* pour la production d'un agent herbicide ou pour la préparation d'une composition herbicide, ainsi que les compositions herbicides correspondantes et les compositions herbicides contenant un agent herbicide nouvellement mis en évidence.

Les Myricacées sont, au vu des données de paléobotanique, très certainement la plus ancienne famille de plantes actinorhizienne et seraient apparues au Cénomanien durant le Crétacé Supérieur (96 millions d'années) (Eriksson O. et Bremer B. 1992, Pollination systems, dispersai modes, life forms, and diversification rates in angiosperm families. Evolution 46 : 333). Plus de 50 espèces appartiennent à cette famille, toutefois la taxonomie intrafamiliale a posé beaucoup de difficultés aux botanistes et deux hypothèses, quant au nombre de genres au sein de cette famille, ont été débattues depuis plus d'un siècle, en particulier en ce qui concerne le rang taxonomique à donner à *Myrica gale* (Wilbur R.L. 1994, The Myricaceae of the United States and Canada : genera, subgenera, and séries. SIDA 16 : 93; et Gleason H.A. et Cronquist A. 1991, Manual of vascular plants of northeastern United States and adjacent Canada. 2nd Edition. New York Botanical Garden, Bronx, pp 80-81 notamment). Récemment, les travaux de Huguet et al 2005 (Huguet V. Gouy M. Normand P. Zimpfer J.F. et Fernandez M.P. 2005, Molecular Phylogeny of Myricaceae : a reexamination of host-symbiont specificity. Molec.Phylo.Evol. 34 : 557) ont confirmé que le genre *Myrica gale* était un genre à part entière de la famille des Myricacées, au côté du genre Comptonia et du genre Morella.

Le genre *Myrica gale* (également nommée *Myrica gale*), dont la distribution géographique est la plus importante, est décrit pour certaines propriétés thérapeutiques tant en Amérique du Nord qu'en Europe (Sylvestre M. Legault J. Dufour D. et Pichette A. 2005, Chemical composition and anticancer activity of leaf essential ol of Myrica gale L. Phytomedicine 12: 299). Des infusions de ses feuilles sont utilisées pour le traitement de troubles gastriques et de difficultés cardiaques (Svoboda K.P. Inglis A. Hampson J. Galambosi B. Asakawa Y. 1998, Biomass production, essential oil yield and composition of Myrica gale L. harvested from wild populations in Scotland and Finland. Flav.Frag. 13: 367). L'huile essentielle de feuilles de *Myrica gale* est utilisée en aromathérapie pour son action mucolytique et anticatarrhale en cas de problèmes respiratoire (Bremness, L. (Ed) 1996 L'oeil Nature : Les plantes aromatiques et médicinales. Bordas, Paris). Cette huile essentielle aurait également des propriétés abortives et est utilisée également comme répulsif d'insectes en Scandinavie (Svoboda et al 1998 ; Jaenson T.G.T. Palsson K. et Borg-Karlson A.K. 2005 Evaluation of extracts and oils of tick-repellent plants from Sweden Med.Vet.Entomol. 19 : 345). Par ailleurs, les feuilles et les fruits de *Myrica gale,* très aromatiques et couvertes de cellules glandulaires, sont utilisés comme épices pour aromatiser breuvages, soupes et bière (Behre, K.E. 1999 The history of beer additives in Europe-a review. Vegetation History and Archaeobotany, 8, 35).

Le document US 4,309,207 décrit l'utilisation de parties aériennes de plantes du genre *Myrica* ou *Vaccinium* pour leur activité antifongique ou inhibitrice de la croissance des plantes. Depuis la publication de ce brevet US qui date de 1982, une reclasssification au sein de la famille des Myricaccées a été opérée. Les *Myrica* décrites dans ce document, et en particulier la *Myrica Pensylvania* qui fait l'objet de l'exemple 4 de ce document, ont maintenant été reclassées dans le genre *Morella* et cette dernière s'appelle maintenant *Morella Pensyl*vanica, comme mentionné dans la publication de Huguet et al de 2005 citée *supra.* De plus, il existe une grande différence physiologique et génétique entre les plantes *Myrica gale* et les plantes du genre *Morella* et notamment *Morella Pensylvanica* (*ex Myrica Pensylvania*). Tout d'abord, les plantes *Myrica gale* ont une interaction très spécifique avec les bactéries. De plus, les inventeurs ont mis en évidence que ces différentes plantes (*Myrica gale* et *Morella*) expriment des principes actifs différents et présentent des profils de dérivés phénoliques très différents. Par conséquent, une activité herbicide de plantes du genre *Morella* ne peut nullement présager d'une activité herbicide de *Myrica gale.*

Dans le cadre de l'invention, et ce de façon totalement inattendue, les inventeurs ont mis en évidence que les plantes *Myrica gale,* sous la forme de partie brute de la plante ou d'extraits, présentaient une activité phytotoxique et pouvaient par conséquent être utilisées, en tant que telles comme bioherbicides ou encore pour la production de bioherbicides.

Dans ce contexte, la présente invention a pour objet l'utilisation d'une plante *Myrica gale* pour la préparation d'une composition herbicide.

Selon un mode de réalisation particulier, un extrait d'une plante de *Myrica gale* est préparé et incorporé dans la composition herbicide. L'extrait utilisé est, par exemple, issu des racines, des feuilles, des tiges, des fruits, des graines et/ou des fleurs. De façon avantageuse, l'extrait utilisé est issu des feuilles, des fruits ou des graines. L'extrait utilisé peut, notamment, être obtenu par extraction avec un solvant choisi parmi l'eau, les alcools, les cétones, les esters, les éthers, les polyols, les solvants chlorés et les mélanges d'au moins deux des solvants précités.

Les inventeurs ont préparé, dans le cadre de l'invention, des extraits riches en flavonoïdes et dérivés.

Selon un autre de ses aspects, l'invention concerne l'utilisation d'une plante *Myrica gale* pour la production d'un agent herbicide. En fonction des étapes mises en oeuvre, l'agent herbicide pourra être sous une forme isolée et purifiée ou en mélange dans un extrait de *Myrica gale.* L'agent herbicide produit est, notamment, choisi parmi : la Myrigalone A, la Myrigalone E, la Myrigalone B, l'uvangoletin, le demethoxymatteucinol, la Myrigalone D, le demethoxymatteucinol-7-methyl ether, la 2',4',6'-trihydroxy-3',5'-dimethyldihydrochalcone, composés dont les inventeurs ont mis en évidence l'activité herbicide dans des extraits de fruits produits.

L'invention a également pour objet des compositions herbicides comprenant un extrait de *Myrica gale,* ainsi que des compositions herbicides comprenant un agent herbicide est choisi parmi : la Myrigalone A, la Myrigalone E, la Myrigalone B, l'uvangoletin, le demethoxymatteucinol, la Myrigalone D, le demethoxymatteucinol-7-methyl ether, la 2',4',6'-trihydroxy-3',5'-dimethyldihydrochalcone.

L'extrait utilisé dans le cadre de l'invention est un extrait cellulaire ou un extrait extracellulaire (lessivage de feuilles par exemple) de la plante qui peut être préparé selon toute méthode connue de l'homme du métier pour extraire des composés des tissus végétaux. L'extrait peut être obtenu à partir des racines, des feuilles, des tiges, des fruits, des graines et/ou des fleurs. De façon avantageuse, l'extrait sera issu des feuilles, des fruits ou des graines, dont l'utilisation n'entraîne pas la mort de la plante dont ils sont extraits. De plus, les extraits des feuilles et des fruits sont particulièrement actifs.

A titre d'exemples de méthodes d'extraction, on peut citer les méthodes classiques d'extraction en solvant à chaud ou à froid, la macération, la lixiviation, la cryoextraction, la digestion, la décoction, les extractions par le CO₂ supercritique, seul ou en mélange avec un co-solvant les extractions utilisant un rayonnement ondulatoire, tel que les micro-ondes ou les ultrasons. Ces méthodes peuvent être combinées à une étape ultérieure de purification, filtration, concentration et/ou séchage.

De façon avantageuse, l'extrait utilisé est obtenu par extraction avec un solvant choisi parmi l'eau, les alcools, les alcanes, les cétones, les esters, les éthers, les polyols, les solvants chlorés et les mélanges d'au moins deux des solvants précités. En particulier, l'extraction pourra être réalisée à l'aide d'un solvant, tel qu'un solvant alcoolique choisi parmi l'éthanol ou le méthanol ou encore le polyéthylène glycol ou le chloroforme. Un solvant tel que précédemment cités est particulièrement préféré pour l'extraction à partir des feuilles, des fleurs et des fruits de la plante. Dans le cas d'une extraction par solvant, par exemple, on peut procéder de la façon suivante : la partie de la plante sélectionnée est récoltée. Cette partie de la plante dont l'extrait est souhaité, qui peut se trouver sous forme fraîche ou sèche, est broyée et/ou déchiquetée, dans le solvant sélectionné ou pas, puis laissée à macérer, de préférence sous agitation, dans le solvant, de préférence pendant 1 heure à 30 jours. De façon avantageuse, on utilisera un rapport massique partie de la plante sur solvant compris entre 1/1 et 1/10 (m/m). L'extraction peut être réalisée à une température comprise entre -10 et 70°C, et notamment entre 18 et 60°C ou à reflux du solvant d'extraction utilisé. L'extraction peut également être réalisée par lixiviation.

L'extrait obtenu peut alors être concentré, ou séché, par exemple par évaporation ou lyophilisation. L'extrait obtenu peut être incorporé tel quel à la composition ou bien être purifié, traité ou fractionné, de façon à enrichir en principe actif recherché. En particulier, l'extrait utilisé sera riche en flavonoïdes, et pourra notamment contenir un ou plusieurs composés choisis parmi la Myrigalone A, la Myrigalone E, la Myrigalone B, l'uvangoletin, le demethoxymatteucinol, la Myrigalone D, le demethoxymatteucinol-7-méthyl ether, la 2',4',6'-trihydroxy-3',5'-dimethyldihydrochalcone.

Les extraits de *Myrica gale* ou directement les composés ci-dessus, obtenus de préférence à partir de plantes *Myrica gale,* et notamment des fruits, peuvent être utilisés pour préparer des compositions herbicides. La Myrigalone A, la Myrigalone E, la Myrigalone B, l'uvangoletin, le demethoxymatteucinol, la Myrigalone D, le demethoxymatteucinol-7-méthyl ether et/ou la 2',4',6'-trihydroxy-3`,5'-dimethyldihydrochalcone obtenus par synthèse chimique, ou obtenus à partir de la plante *Myrica gale* présentent une activité herbicide et peuvent être utilisés en tant qu'agent herbicide. L'activité herbicide recherchée peut être de nature à inhiber la germination de graines, à empêcher la reprise de développement de méristèmes et de bourgeons souterrains ou aériens, à inhiber le développement et la croissance des racines ainsi que des hypocotyles, des épicotyles et de toutes parties aériennes des plantes.

Tout type de compositions herbicides connues pourra être préparé. On pourra notamment utiliser des compositions herbicides sous la forme de granules, de liquides, d'émulsions aqueuses ou de concentrés émulsifiables, comme adjuvants pour bouillie herbicide. Dans des adjuvants pour bouillie herbicide, la partie brute de *Myrica gale,* un de ses extraits ou un des agents herbicides précédemment cités pourra être associé à un ou plusieurs composés choisis parmi : sulfate d'ammonium, huile de pétrole, huile de colza estérifiée, amine grasse de suif éthoxylée, huile minérale de paraffine, nonylphénol polyéthoxyle, Laminaria digitata, polymère d'amine gras, polysorbate 20, Huile de pin, dérives d'acides gras végétaux, alcools terpéniques, acide oléique, esters méthyliques d'acides gras, esters de phosphate d'alcools gras polyoxyalkyles, polyoxyéthylène amine, alkyl polysaccharides, lécithine de soja, octylphénol octaglycol éther, ester sulfurique, alcools et acides gras sulfones, triéthanolamine, polymère complexe d'éthylène et de propylène, heptaméthyltrisiloxane modifié polyalkylèneoxide, alkyl phénol, polyoxyéthylène, heptaméthyltrisiloxane modifié, polyalkyleneoxide, oxyde d'éthylène, couramment utilisés dans des adjuvants pour bouillie herbicide, comme le montre la liste publiée par le ministère de l'agriculture et de la pêche français sur le site http://e-phy.agriculture.gouv.fr/usa/31651003.htm auquel on pourra se référer. Les compositions herbicides pourront également être incorporées à des tissus imprégnés ou des films polymères.

Les compositions seront, par exemple, utilisées de manière à avoir des concentrations, au moment du traitement, allant de 10⁻¹² à 10² M, de préférence de 10⁻⁵ et 10° M d'agent herbicide actif. Dans le cas de compositions sous la forme de granulés notamment, l'ajout d'eau sera alors nécessaire.

Les exemples ci-après, en référence aux Figures annexées, permettent d'illustrer l'invention, mais n'ont aucun caractère limitatif.
La **Figure 1** résume le protocole de fractionnement utilisé.
La **Figure 2** présente les données RMN des composés isolés.
Les **Figures 3** à **6** présentent les longueurs moyennes (cm) des racines de moutarde en présence, respectivement, de différentes quantités de broyats de feuilles de *Myrica gale,* de graines entières de *Myrica gale,* de lessivât méthanolique de graines de *Myrica gale* et de Myrigalone A en solution méthanolique.
La **Figure 7** présente des chromatogrammes démontrant les différences très nettes en terme de contenu chimique, d'extrait de *Myrica gale* par rapport à des extraits de *Morella cerifera* et *Morella pensylvanica* et extraits de *Myrica gale* et identification des Métabolites

### Matériel végétal

Les fruits de *Myrica gale* ont été récoltés le long de l'étang de Biscarosse en Gironde en décembre 2004. L'extraction par lessivage assisté aux ultrasons de 350g de fruits secs dans 2L de méthanol a permis d'obtenir 35g de résidu sec. L'extrait est résineux à température ambiante.

### Fractionnement et Purification

### Systèmes analytiques et détection

Après chaque étape de la purification, les fractions obtenues sont analysées sur différents systèmes chromatographiques, CCM et HPLC, afin de déterminer leur composition et de réunir celles qui sont qualitativement homologues. Les fractions réunies, considérées comme intéressantes, sont conservées pour la suite du travail et font alors l'objet de mises au point de nouveaux systèmes de séparation.

A chaque étape du fractionnement, la révélation et la visualisation des plaques CCM font appel à l'irradiation UV à 254 et 366nm.

Les analyses HPLC sont réalisées sur un Agilent 1100, la colonne Kromasil (250 x 4,6 mm, 5µm, 100Å) est constituée de silice greffée en C18. Le volume d'échantillon injecté dans la colonne est de 5 µL avec une détection UV entre 200 et 700 nm grâce à un détecteur à barrettes de diodes. Quatre longueurs d'onde particulières sont utilisées pour la visualisation des chromatogrammes : 254, 280, 320 et 350 nm. Le solvant d'élution est un gradient d'acétonitrile dans l'eau avec 0,4% d'acide acétique.

### Systèmes préparatifs

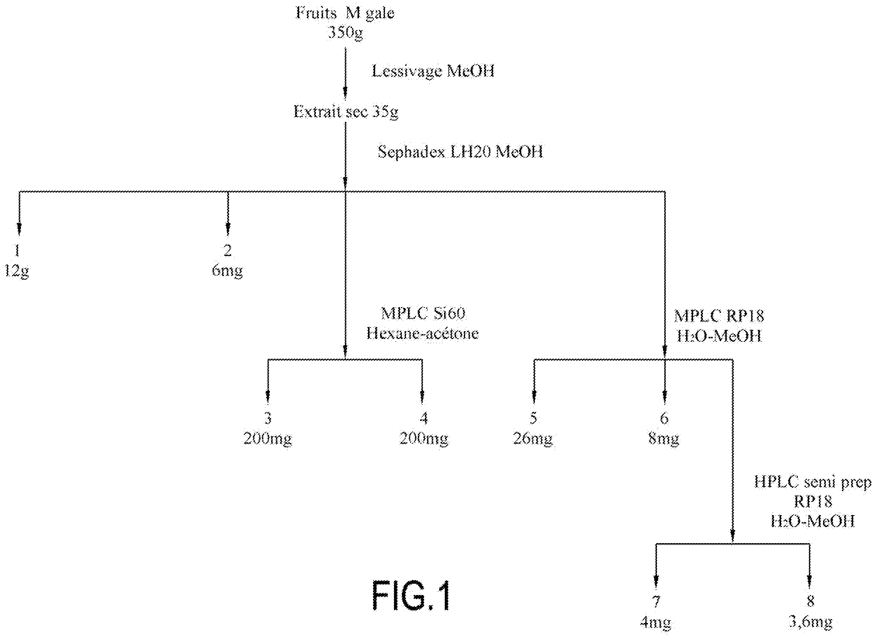

Le protocole de fractionnement est résumé **Figure 1** sur laquelle les fractions n'ayant donné lieu à l'obtention d'aucune molécule pure ne sont pas représentées.

Le lessivat de fruits de *Myrica gale* est fractionné par une première chromatographie sur colonne ouverte de Sephadex LH-20 (600x45mm) avec un solvant d'élution constitué de méthanol. Ce partage permet la récupération de 13 fractions (A à M).

L'analyse de la fraction C a montré qu'elle n'était constituée que d'une molécule, le composé **1,** à hauteur de 12g. Le composé **2** (6mg) a été obtenu suite à sa cristallisation dans la fraction D à -20°C. Les fractions de plus grandes masses (E, 8g et F, 7g) ont ensuite fait l'objet de chromatographies supplémentaires. Une MPLC (450x25mm) de la fraction E sur silice 60 (15x40µm) avec un solvant d'élution constitué d'un gradient d'acétone dans de l'hexane a permis l'obtention de 2 molécules pures (**3**, 200mg et **4**,100mg). Les 13 fractions FA à FM ont été obtenues par chromatographie de la fraction F par MPLC (450x25mm) sur phase inverse (RP18 15x40µm). Deux de ces fractions étaient constituées chacune d'une molécule pure (composés **5,** 26mg et **6,** 8mg). La fraction FL a fait l'objet d'une HPLC semi-préparative sur phase inverse (X-Terra Prep MS C18, 5µm, 10 x 100mm, isocratique 40% de solvant A (H₂O) 60% de solvant B (acétonitrile), débit 3 ml/min). Cette dernière chromatographie a permis la purification des composés **7** et **8** (4 et 3,6mg).

### Analyses Structurales

L'élucidation structurale des composés a été établie par l'interprétation des données de spectroscopie UV, de spectrométrie de masse et de RMN monodimensionnelle ¹H et ¹³C ainsi que RMN bidimensionnelle hétéronucléaire ¹H-¹³C HSQC et ¹H-¹³C HMBC. Les spectres UV ont été enregistrés sur un appareil UVIKON 943 dans le méthanol. Les spectres de masse ont été réalisés sur une chaîne LC-MS Agilent 1100 équipé d'un détecteur MSD 1100 avec une interface APCI positive et négative. Les spectres RMN ont été réalisés au service commun de RMN de l'UCBL sur un appareil Bruker DRX500 dans le méthanol-d₄ à 500,13 MHz en proton et 125,77 MHz en carbone-13.

Les différentes étapes de chromatographies successives réalisées sur le lessivat de fruits de *Myrica gale* ont permis de purifier et d'identifier 8 métabolites. Les structures de ces composés sont les suivantes :

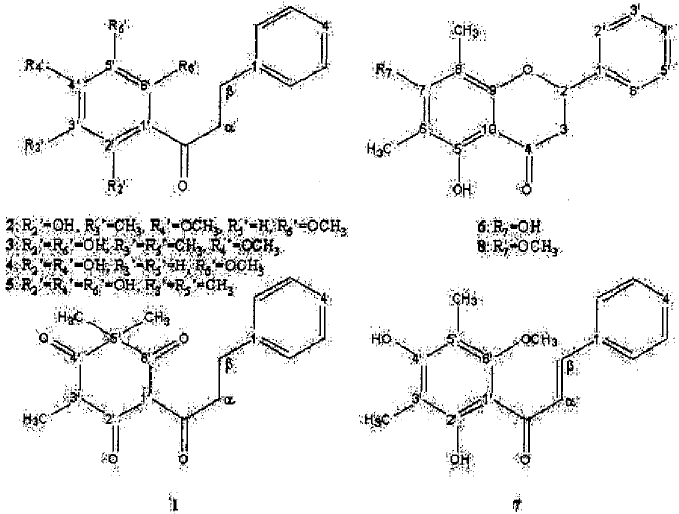

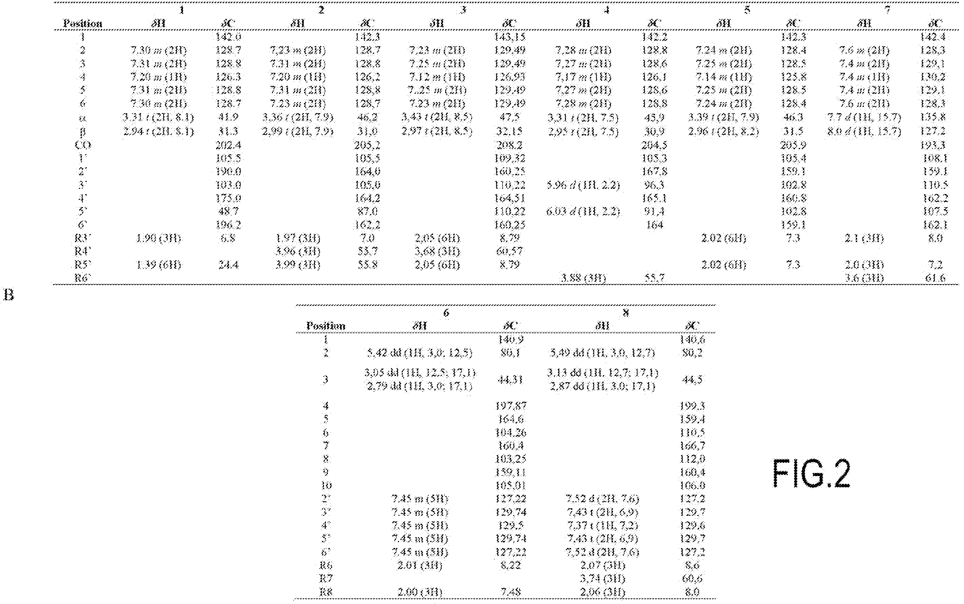

Les élucidations structurales ont été établies par l'interprétation des données RMN du proton et du carbone en respectant les corrélations observées en HMBC (**Figure 2**). Les tableaux présentés Figure 2 donnent les valeurs des déplacements RMN 1H et 13C des chalcones et dihydrochalcones (A) et des flavanones (B). Les déplacements sont donnés en ppm, les constantes de couplage entre parenthèse sont en Hz. Toutes les molécules purifiées sont des flavonoïdes. Toutes les formules proposées sont cohérentes avec l'ensemble des autres données spectrales, UV et masse.

Tous les composés avaient déjà été décrits dans la littérature. Sur les 8 molécules purifiées, 5 avaient déjà été identifiées chez *Myrica gale* et portent les noms suivants : Myrigalone A, E et B, pour les composés **1, 2** et **3** respectivement, Myrigalone D, pour le composé **7** et l'uvangoletin pour le composé 4. Les autres composés suivants n'avaient jamais été décrits chez *Myrica gale :* deméthoxymatteucinol, pour le composé 6, deméthoxymatteucinol-7-méthyl ether, pour le composé **8.**

### Activité Bio-herbicide de Mvrica gale

### Matériel et Méthodes

Extraits végétaux utilisés pour évaluer leur activité herbicide :
Les extraits suivants ont été testés quant à leurs propriétés herbicides :
   - Feuilles sèches réduites en poudre
   - Fruits entiers, secs
   - Lessivat méthanolique de fruits
   - Myrigalone A pure en solution méthanolique

### Plantes utilisées comme cible de l'activité herbicide

Les plantes suivantes ont été utilisées pour évaluer l'activité herbicide des différents extraits de *Myrica gale :*
- Sorgho
- Blé
- Moutarde
- Cresson
- Renouée

### Tests d'activité de phytotoxicité

Les graines des plantes cibles sont déposées à la surface d'un papier filtre (Whatman n°1) au sein d'une boite de Pétri (9cm de diamètre). En fonction des plantes cibles, le nombre de graines par boite de Pétri varie de 8 à 15 graines.

Dans la boite de Pétri, 8mL d'eau sont rajoutés pour assurer la germination des graines cibles.

A ces 8mL d'eau sont incorporés les différents extraits méthanoliques de *Myrica gale* à tester à des concentrations de 0,1mg/mL, 0,5 mg/mL ou 1mg/mL apportés par 50µL de méthanol. Les témoins sont constitués de méthanol.

Pour les évaluations des activités des extraits secs (broyat de feuilles et fruits entiers), à la surface des boites de Pétri sont saupoudrés les extraits à des concentrations de 10mg/mL, 20mg/mL ou 30mg/mL. Les témoins ne sont pas saupoudrés.

Toutes les conditions testées sont répétées au moins 3 fois (3 boites de Pétri par traitement contenant chacune de 8 à 15 graines). Les expériences ont été reproduites indépendamment plusieurs fois.

Après ajout des différents extraits à tester, les boites de Pétri sont mises à 28°C.

La lecture des boites est réalisée dès que les témoins ont convenablement poussés avant le stade 1 feuille.

### Paramètres mesurés pour l'évaluation herbicide

Après germination des graines cibles, les longueurs des racines et des hypocotyles de chaque plantule sont mesurées ainsi que le taux de germination des graines.

### Résultats

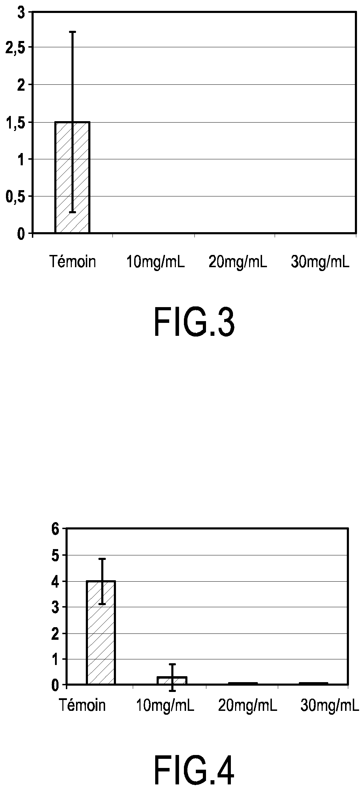

La **Figure 3** présente les longueurs moyennes (cm) des racines de moutarde en présence de 10, 20 et 30 mg/mL de broyats de feuilles de *Myrica gale.* L'inhibition du développement des plantules est totale dès 10mg/mL.

La **Figure 4** présente les longueurs moyennes (cm) des racines de cresson en présence de 10, 20 et 30 mg/mL de graines entières de *Myrica gale.*

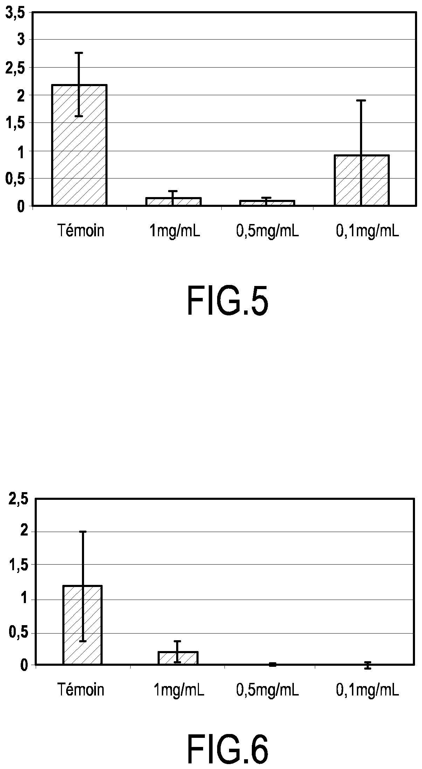

La **Figure 5** présente les longueurs moyennes (cm) des hypocotyles de moutarde en présence de 0,1, 0,5 et 1 mg/ml de lessivat méthanolique de graines de *Myrica gale.*

La **Figure 6** présente les longueurs moyennes (cm) des racines de moutarde en présence de 0,1, 0,5 et 1 mg/ml de Myrigalone A en solution méthanolique.

### Analyse de la variabilité des composés phénoliques produits dans les différen organes de la plante par Myrica gale et deux espèces à spectre de nodulation large, Morella cerifera et Morella pensylvanica.

### 1- Matériel Végétal

Les analyses de variabilité inter et intra spécifiques ont été effectuées sur des feuilles, des racines et des graines prélevées sur des plantes adultes des espèces *Myrica gale, Morella cerifera* et *Morella pensylvanica.* Deux types de matériel ont été utilisés. Le 1^{er} type concerne des plantes nodulées âgées de 12 à 18 mois cultivées hors sol en conditions contrôlées (Huguet, 2003). Les échantillons de feuilles et de racines issus de ces plantes ont été conservés à température ambiante après un séchage à l'obscurité et à l'air libre. Le 2^{ème} type de matériel concerne des plantes adultes, de terrain, dont les échantillons de feuilles et de racines sont conservées à -20°C sans avoir été séchées.

### 2- Préparation des extraits végétaux

### 2-1-Exsudats des feuilles et des graines

Les composés présents à la surface des feuilles et des graines sont récupérés par lessivage des échantillons dans 40 mL d'un mélange éthanol/méthanol (1:1) à température ambiante pendant 20 minutes, sous agitation. Le solvant est ensuite évaporé à sec sous pression réduite et le résidu obtenu est alors repris dans 1,5 mL de méthanol.

### 2-2- Contenu des feuilles, des racines, des graines et des plantules

Les échantillons sont broyés dans de l'azote liquide, puis les composés cellulaires sont extraits à chaud dans 50 mL de méthanol/éthanol (1/1) par chauffage à reflux pendant 2 x 15 minutes. Après filtration, le solvant est évaporé à sec sous pression réduite et le résidu est repris dans 2 à 3 mL de méthanol.

Tous les échantillons sont conservés à -20°C.

### 3- Analyse des composés phénoliques

L'analyse des différents échantillons se fait par chromatographie HPLC. L'appareil utilisé est un Agilent 1100, la colonne Kromasil (250 x 4,6 mm, 5µm, 100Å) est constitué de silice greffée en C18. Le volume d'échantillon injecté dans la colonne est de 20 µL. Le gradient des solvants d'élution pour l'analyse des lessivats est différent de celui de l'analyse des broyats et est présenté dans le **TABLEAU 1** ci-dessous :

**TABLEAU 1 : Conditions d'élution utilisées en HPLC.**

| | **Temps (min)** | **Solvant A*** | **Solvant B⁺** |
|---|---|---|---|
| **Lessivats foliaires** | 0,00 | 70% | 30% |
| | 10,00 | 70% | 30% |
| | 40,00 | 25% | 75% |
| | 50,00 | 15% | 85% |
| | 55,00 | 15% | 85% |
| | 60,00 | 10% | 90% |
| | 66,00 | 10% | 90% |
| | 69,00 | 70% | 30% |
| | | | |
| **Broyats** | 0,00 | 85% | 15% |
| | 8,00 | 85% | 15% |
| | 18,00 | 69% | 31% |
| | 24,00 | 69% | 31% |
| | 38,00 | 22% | 78% |
| | 46,00 | 22% | 78% |
| | 54,00 | 15% | 85% |
| | 58,00 | 15% | 85% |
| | 61,00 | 85% | 15% |

| | | | |
|---|---|---|---|
| Solvant A* Pour les lessivats : H₂O / HCOOH (100/4) Pour les broyats : H₂O / HCOOH (100/2) Solvant B⁺ Pour les lessivats : Acétonitrile / H₂O / HCOOH (80/20/4) Pour les broyats : Acétonitrile / H₂O / HCOOH (80/20/2) | | | |

Le détecteur à barrettes de diodes permet d'effectuer la détection à toutes les longueurs d'ondes du spectre UV-Visible. Trois longueurs d'ondes ont alors été utilisées pour suivre les analyses : 280, 320 et 350 nm. De plus, ce détecteur réalise un spectre d'absorption toutes les 30 ms et permet donc d'attribuer à chaque signal (suffisamment intense), en sortie de colonne, son spectre d'absorption UV.

### 4- Analyse statistique

Les résultats de l'HPLC sont consignés dans une matrice de données binaires (1/0) à x colonnes (pics du chromatogramme) et y lignes (échantillons). Cette matrice est ensuite analysée en AFC. Ces tests statistiques sont réalisés avec le logiciel ADE4 (www.pbil.univ-lyonl.fr).

### 5- Résultats

Le gradient du solvant d'élution utilisé pour les analyses HPLC des lessivats foliaires étant différent de celui utilisé pour les broyats, la comparaison des temps de rétention entre ces deux types d'échantillons n'est pas possible et leurs profils chromatographiques sont donc analysés séparément.

La comparaison des chromatogrammes est faite à deux longueurs d'onde de détection : 280 nm qui permet d'observer les composés phénoliques en général et 350 nm qui correspond à l'absorbance plus spécifique des flavonoïdes.

### 5-1- Lessivats foliaires et broyats foliaires et racinaires

L'analyse en AFC des chromatogrammes des lessivats et broyats foliaires et des broyats racinaires, sépare systématiquement, sur le premier axe, les échantillons de *Myrica gale* de ceux des deux autres espèces (Figure 5). Cette dichotomie s'observe aux deux longueurs d'onde de détection utilisées, 280 et 350 nm.

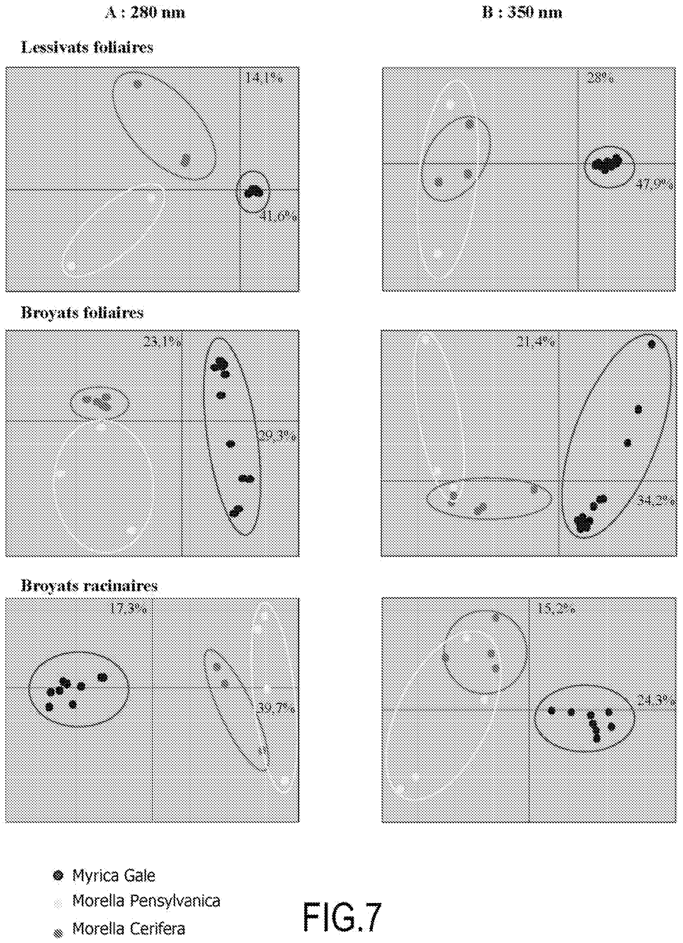

Seule l'AFC issues des signaux des broyats foliaires permet de séparer sur le deuxième axe et surtout aux deux longueurs d'onde de détection, les échantillons de *Morella cerifera* de ceux de *Morella pensylvanica* **(****Figure 7****).**

Le nombre de signaux détectés dans les broyats foliaires et racinaires est sensiblement le même pour les trois espèces étudiées. Par contre, environ deux fois plus de signaux sont détectés dans les exsudats foliaires de *Myrica gale* que dans ceux des deux autres espèces.

Dans ces trois compartiments (lessivats et broyats foliaires et racinaires), les échantillons de *Myrica gale* présentent deux à trois fois plus de signaux qui lui sont spécifiques que n'en présentent *Morella cerifera* et *Morella pensylvanica.*

### 5-2- Broyats et lessivats de graines

Les profils chromatographiques du broyat de graines de *Myrica gale* sont visuellement extrêmement différents de ceux des broyats de graines de *Morella pensylvanica* et de *Morella cerifera,* en particulier, l'intensité et le nombre des signaux les plus lipophiles sont plus élevés chez *Myrica gale.* Le broyat de graines de *Myrica gale* est très riche en métabolites secondaires avec plus d'une centaine de signaux détectés dont 37% sont absents des extraits de graines des deux autres espèces. Parmi ces pics spécifiques, une douzaine sont situés en fin de chromatogramme (à partir de 45 minutes), correspondant aux molécules les plus lipophiles de l'extrait. Les spectres UV des pics spécifiques à *Myrica gale* révèlent une très grande diversité de composés dont des acides phénoliques, des flavonoïdes ainsi que des composés aux spectres atypiques. Seule une origine de graines de chaque espèce étant disponible, aucune analyse statistique n'a été réalisée.

En conclusion, les analyses HPLC réalisées sur tous les échantillons des différents organes et compartiments montrent que les trois espèces étudiées produisent une diversité de métabolites très importante avec la présence de plusieurs dizaines de signaux détectés.
Les analyses de variabilité qualitative en composés phénoliques séparent sur le premier axe de toutes les analyses AFC, les échantillons de *Myrica gale* de ceux des deux espèces à large spectre de nodulation, *Morella cerifera* et *Morella pensylvanica.* Cette séparation est systématiquement corrélée à des dizaines de pics des chromatogrammes des extraits. Il apparaît donc que *Myrica gale* se distingue de ces deux espèces par un contenu phénolique original.

## Revendications

1. Utilisation d'une plante *Myrica gale* pour la préparation d'une composition herbicide.

2. Utilisation selon la revendication 1 **caractérisée en ce qu'**un extrait d'une plante de *Myrica gale* est préparé et incorporé dans la composition herbicide.

3. Utilisation selon la revendication 2 **caractérisée en ce que** l'extrait utilisé est issu des racines, des feuilles, des tiges, des fruits, des graines et/ou des fleurs.

4. Utilisation selon la revendication 3 **caractérisée en ce que** l'extrait utilisé est issu des feuilles, des fruits ou des graines.

5. Utilisation selon l'une quelconque des revendications 1 à 4, **caractérisée en ce que** l'extrait utilisé est obtenu par extraction avec un solvant choisi parmi l'eau, les alcools, les cétones, les esters, les éthers, les polyols, les solvants chlorés et les mélanges d'au moins deux des solvants précités.

6. Utilisation selon l'une quelconque des revendications 1 à 5, **caractérisée en ce que** l'extrait utilisé est riche en flavonoïdes et dérivés.

7. Utilisation d'une plante *Myrica gale* pour la production d'un agent herbicide.

8. Utilisation selon la revendication 7 **caractérisée en ce que** l'agent herbicide est sous une forme isolée et purifiée ou en mélange dans un extrait de *Myrica gale.*

9. Utilisation selon la revendication 7 ou 8 **caractérisée en ce que** l'agent herbicide est choisi parmi : la Myrigalone A, la Myrigalone E, la Myrigalone B, l'uvangoletin, le demethoxymatteucinol, la Myrigalone D, le demethoxymatteucinol-7-méthyl ether, la 2',4',6'-trihydroxy-3',5'-dimethyldihydrochalcone.

10. Une composition herbicide comprenant un extrait de *Myrica gale* ou un agent herbicide choisi parmi : la Myrigalone A, la Myrigalone E, la Myrigalone B, l'uvangoletin, le demethoxymatteucinol, la Myrigalone D, le demethoxymatteucinol-7-méthyl ether, la 2',4',6`-trihydroxy-3',5'-dimethyldihydrochalcone, se présentant sous la forme d'un adjuvant pour bouillie herbicide qui contient en outre un ou plusieurs composés choisis parmi : sulfate d'ammonium, huile de pétrole, huile de colza estérifiée, amine grasse de suif éthoxylée, huile minérale de paraffine, nonylphénol polyéthoxyle, Laminaria digitata, polymère d'amine gras, polysorbate 20, Huile de pin, dérives d'acides gras végétaux, alcools terpéniques, acide oléique, esters méthyliques d'acides gras, esters de phosphate d'alcools gras polyoxyalkyles, polyoxyéthylène amine, alkyl polysaccharides, lécithine de soja, octylphénol octaglycol éther, ester sulfurique, alcools et acides gras sulfones, triéthanolamine, polymère complexe d'éthylène et de propylène, heptaméthyltrisiloxane modifié polyalkylèneoxide, alkyl phénol, polyoxyéthylène, heptaméthyltrisiloxane modifié, polyalkyleneoxide, oxyde d'éthylène.

11. Composition herbicide selon la revendication 10 **caractérisée en ce qu'**elle se présente sous la forme de granules, de liquides, d'émulsions aqueuses ou de concentrés émulsifiables.

12. Composition herbicide selon la revendication 10 ou 11 **caractérisée en ce qu'**elle est incorporée à un tissu imprégné ou un film polymère.

## Patentansprüche

1. Verwendung einer Myrica gale Pflanze zur Herstellung einer herbiziden Zusammensetzung.

2. Verwendung nach Anspruch 1, **dadurch gekennzeichnet, dass** ein Extrakt einer Myrica gale Pflanze hergestellt und in die herbizide Zusammensetzung eingeleitet wird.

3. Verwendung nach Anspruch 2, **dadurch gekennzeichnet, dass** der verwendete Extrakt von den Wurzeln, Blättern, Stielen, Früchten, Körnern und/oder Blüten stammt.

4. Verwendung nach Anspruch 3, **dadurch gekennzeichnet, dass** der verwendete Extrakt von den Blättern, Früchten oder Körnern stammt.

5. Verwendung nach einem der Ansprüche 1 bis 4, **dadurch gekennzeichnet, dass** der verwendete Extrakt durch Extraktion mit einem Lösungsmittel erhalten wird, das ausgewählt ist unter Wasser, den Alkoholen, den Ketonen, den Estern, den Ethern, den Polyolen, den chlorhaltigen Lösungsmitteln und den Gemischen von mindestens zwei der vorgenannten Lösungsmitteln.

6. Verwendung nach einem der Ansprüche 1 bis 5, **dadurch gekennzeichnet, dass** der verwendete Extrakt reich an Flavonoiden und Derivaten ist.

7. Verwendung einer Myrica gale Pflanze zur Herstellung eines herbiziden Mittels.

8. Verwendung nach Anspruch 7, **dadurch gekennzeichnet, dass** das herbizide Mittel in einer isolierten und gereinigten Form oder im Gemisch in einem Extrakt von Myrica gale vorhanden ist.

9. Verwendung nach Anspruch 7 oder 8, **dadurch gekennzeichnet, dass** das herbizide Mittel ausgewählt ist unter: Myrigalon A, Myrigalon E, Myrigalon B, Uvangoletin, Demethoxymatteucinol, Myrigalon D, Demethoxymatteucinol-7-Methylether, 2`,4',6`-Trihydroxy-3`,5`-Dimethyldihydrochalcon.

10. Herbizide Zusammensetzung, umfassend einen Extrakt von Myrica gale oder ein herbizides Mittel, das ausgewählt ist unter: Myrigalon A, Myrigalon E, Myrigalon B, Uvangoletin, Demethoxymatteucinol, Myrigalon D, Demethoxymatteucinol-7-Methylether, 2`,4`,6`-Trihydroxy-3`,5`-Dimethyldihydrochalcon, die in Form eines Zusatzes für eine herbizide Brühe vorhanden ist, die ferner eine oder mehrere Verbindungen umfasst, die ausgewählt sind unter: Ammoniumsulfat, Petroleumöl, verestertem Rapsöl, Talkaminethoxylaten, mineralischem Paraffinöl, Nonylphenol-Polyethoxyl, Laminaria digitata, Fettsäureamin-Polymer, Polysorbat 20, Kiefernöl, Derivaten von pflanzlichen Fettsäuren, Terpenalkoholen, Oleinsäure, Fettsäure-Methylestern, Phosphatestern von Polyoxyalkyl-Fettalkoholen, Polyoxyethylen-Amin, Alkyl-Polysacchariden, Sojalecithin, Octylphenol-Octaglycol-Ether, Schwefelsäureester, Alkoholen und Sulfon-Fettsäuren, Triethanolamin, einem komplexen Polymer von Ethylen und Propylen, modifiziertem Heptamethyltrisiloxan-Polyalkylenoxid, Alkylphenol, Polyoxyethylen, modifiziertem Heptamethyltrisiloxan, Polyalkylenoxid, Ethylenoxid.

11. Herbizide Zusammensetzung nach Anspruch 10, **dadurch gekennzeichnet, dass** sie in Form von Granulaten, Flüssigkeiten, wässerigen Emulsionen oder emulgierbaren Konzentraten vorhanden ist.

12. Herbizide Zusammensetzung nach Anspruch 10 oder 11, **dadurch gekennzeichnet, dass** sie in ein imprägniertes Gewebe oder eine Polymerfolie integriert ist.

## Claims

1. **-** The use of a *Myrica gale* plant for preparing a herbicidal composition.

2. **-** The use as claimed in claim 1, **characterized in that** an extract of a *Myrica gale* plant is prepared and incorporated into the herbicidal composition.

3. **-** The use as claimed in claim 2, **characterized in that** the extract used is derived from the roots, the leaves, the stems, the fruits, the seeds and/or the flowers.

4. **-** The use as claimed in claim 3, **characterized in that** the extract used is derived from the leaves, the fruits or the seeds.

5. **-** The use as claimed in any one of claims 1 to 4, **characterized in that** the extract used is obtained by extraction with a solvent selected from water, alcohols, ketones, esters, ethers, polyols, chlorinated solvents and mixtures of at least two of the abovementioned solvents.

6. **-** The use as claimed in any one of claims 1 to 5, **characterized in that** the extract used is rich in flavonoids and derivatives.

7. **-** The use of a *Myrica gale* plant for producing a herbicidal agent.

8. **-** The use as claimed in claim 7, **characterized in that** the herbicidal agent is in an isolated and purified form or as a mixture in a *Myrica gale* extract.

9. **-** The use as claimed in claim 7 or 8, **characterized in that** the herbicidal agent is selected from: myrigalone A, myrigalone E, myrigalone B, uvangoletin, demethoxymatteucinol, myrigalone D, demethoxymatteucinol-7-methyl ether and 2',4',6'-trihydroxy-3',5'-dimethyldihydrochalcone.

10. **-** A herbicidal composition comprising a *Myrica gale* extract or a herbicidal agent selected from: myrigalone A, myrigalone E, myrigalone B, uvangoletin, demethoxymatteucinol, myrigalone D, demethoxymatteucinol-7-methyl ether and 2',4',6'-trihydroxy-3',5'-dimethyldihydrochalcone, in the form of an adjuvant for herbicidal mixture which also contains one or more compounds selected from: ammonium sulfate, petroleum oil, esterified rapeseed oil, ethoxylated tallow fatty amine, paraffin mineral oil, polyethoxylated nonylphenol, *Laminaria digitata,* fatty amine polymer, polysorbate 20, pine oil, plant fatty acid derivatives, terpene alcohols, oleic acid, fatty acid methyl esters, polyoxyalkylated fatty alcohol phosphate esters, polyoxyethylene amine, alkyl polysaccharides, soybean lecithin, octylphenol octaglycol ether, sulfuric ester, sulfonated fatty alcohols and acids, triethanolamine, ethylene/propylene complex polymer, polyalkylene oxide-modified heptamethyltrisiloxane, alkyl phenol, polyoxyethylene, modified heptamethyltrisiloxane, polyalkylene oxide and ethylene oxide.

11. **-** The herbicidal composition as claimed in claim 10, **characterized in that** it is in the form of granules, liquids, aqueous emulsions or emulsifiable concentrates.

12. - The herbicidal composition as claimed in claim 10 or 11, **characterized in that** it is incorporated into an impregnated fabric or a polymer film.
